# EUROPÄISCHE PATENTSCHRIFT

(11) **EP 2 737 307 B1**
(45) Veröffentlichungstag und Bekanntmachung des Hinweises auf die Patenterteilung: **21.11.2018**
(21) Anmeldenummer: 12748153.9
(22) Anmeldetag: 12.06.2012
(51) Int. Cl.: G01N 27/403, H01L 51/05, H01L 51/10

(54) **ELEKTRODENANORDNUNG UND VERFAHREN ZUM BETREIBEN DER ELEKTRODENANORDNUNG**
ELECTRODE ARRANGEMENT AND METHOD FOR OPERATING THE ELECTRODE ARRANGEMENT
AGENCEMENT D'ÉLECTRODES ET PROCÉDÉS POUR LE FAIRE FONCTIONNER

(30) Priorität: 28.07.2011 DE 102011108885
(43) Veröffentlichungstag der Anmeldung: 04.06.2014
(73) Patentinhaber: Forschungszentrum Jülich GmbH, 52425 Jülich (DE)
(72) Erfinder: MAYER, Dirk, 50226 Frechen (DE); LIU, Yaqing, Changchun 130021 (CN); OFFENHÄUSSER, Andreas, 4731 Eynatten (BE)
(86) Internationale Anmeldenummer: PCT/DE2012/000616
(87) Internationale Veröffentlichungsnummer: WO 2013/013649

(56) Entgegenhaltungen:
- US-A1- 2002 110 831
- US-A1- 2009 101 955
- YAQING LIU ET AL: "An Electrochemically Transduced XOR Logic Gate at the Molecular Level", ANGEWANDTE CHEMIE (INTERNATIONAL ED. IN ENGLISH), Bd. 122, Nr. 14, 29. März 2010 (2010-03-29), Seiten 2649-2652, XP55040180, ISSN: 0044-8249, DOI: 10.1002/ange.200906333 in der Anmeldung erwähnt
- TUCKER J H R ET AL: "Recent developments in the redox-switching binding of organic compounds", CHEMICAL SOCIETY REVIEWS, CHEMICAL SOCIETY, LONDON, GB, Bd. 31, Nr. 3, 1. Januar 2002 (2002-01-01) , Seiten 147-156, XP008121851, ISSN: 0306-0012, DOI: 10.1039/A804251I [gefunden am 2002-03-18]

## Beschreibung

### Stand der Technik

Bisherige Transistoren basieren auf halbleitenden Festkörpern oder Molekülen.

Nachteilig werden bei den Transistoren nach dem Stand der Technik Schalteffekte durch Raumladungsrandschichten mit erheblicher Ausdehnung erzeugt. Für chemische Sensorfunktionen müssen an den Halbleitenden Schichten molekulare oder biologische Funktionen zusätzlich an den Transistor angebunden werden. Nachteilig wird hierdurch die elektrische Kopplung verschlechtert. Dies führt zu einer Reduzierung der Empfindlichkeit, langen Reaktionszeiten bis hin zum Signalverlust.

Aus Liu et al. (Y. Liu, A. Offenhäusser, D. Mayer (2010). An Electrochemically Transduced XOR Logic Gate at the Molecular Level. Angew. Chem. Int. Ed., 49, 2595 -2598) ist bekannt, eine Elektrodenanordnung mit einem Ladungstransfermediator und einer Redoxspezies vorzusehen. Die Anordnung gewährleistet einen Ladungstransfer in eine Richtung der Elektrodenanordnung.

Aus Tran et al. (E. Tran, M. Duati, G. M. Whitesides, M. A. Rampi (2006). Gating current flowing through molecules in metal-molecules-metal junctions. Faraday Discuss., 2006, 131, 197-203) ist es bekannt, einen Stromfluss zwischen Molekülen einer Metall-Molekül-Metall-Brücke fließen zu lassen. Nachteilig ist, dass es mit dieser Anordnung nicht möglich ist, einen reproduzierbaren Stromfluss in der Metall-Molekül-Metall-Brücke zu induzieren.

### Aufgabe und Lösung der Erfindung

Aufgabe der Erfindung ist es eine Elektrodenanordnung bereit zu stellen, die als elektrischer Schalter betrieben werden kann, und dabei die Nachteile halbleitender Transistoren aus dem Stand der Technik nicht aufweist. Die Elektrodenanordnung soll im Vergleich zu den bisherigen Elektroden-Elektrolyt-Anordnungen reproduzierbare Ergebnisse in Bezug auf eine Informationskodierung leisten.

Die Aufgabe wird durch eine Elektrodenanordnung nach Anspruch 1 und durch das Verfahren zum Betreiben der Elektrodenanordnung gemäß dem Nebenanspruch gelöst. Vorteilhafte Ausgestaltungen ergeben sich aus den jeweils darauf rückbezogenen Ansprüchen.

### Beschreibung der Erfindung

Die Elektrodenanordnung umfasst eine Steuerelektrode und eine Kollektorelektrode. Die Anordnung aus Steuerelektrode und Kollektorelektrode ist zur zyklischen Reduktion und Oxidation einer Redoxspezies in einem Elektrolyten geeignet. Die Steuerelektrode und die Kollektorelektrode sind auf einem isolierenden Substrat angeordnet. Zum Anlegen einer Spannung an die Elektroden sind diese zusätzlich gegen eine Gegenelektrode geschaltet. Die Elektrodenanordnung umfasst somit:
a) die Steuerelektrode zur initialisierenden Umsetzung der Redoxspezies für einen zyklischen Elektronentransport zwischen der Steuerelektrode und der Kollektorelektrode sowie
b) eine der Steuerelektrode gegenüberliegend angeordnete Kollektorelektrode, wobei auf der dem isolierenden Substrat gegenüberliegenden Seite der Kollektorelektrode zusätzlich eine Schichtstruktur aus einem zweiten Isolator und einem hierauf angeordneten Ladungstransfermediator für die Umsetzung der Redoxspezies im Elektrolyten angeordnet ist.

Die Elektrodenanordnung ist zur zyklischen Reduktion und Oxidation einer Redoxspezies in einem Elektrolyten geeignet und führt diese entsprechend der durch die Gegenelektrode angelegten Spannungen an den Elektroden aus. Hierzu tauchen die Steuerelektrode und die Kollektorelektrode in den Elektrolyten ein. Die elektrisch aktive (Molekül-) Schicht des Ladungstransfermediators, weist Gruppen auf, die den Ladungstransfer mit der Redoxspezies in der Umgebung, das heißt mit Molekülen in (Elektrolyt-)Lösung eingehen können.

Die Steuerelektrode und die Kollektorelektrode sind auf einem isolierenden Substrat angeordnet. Beide Elektroden sind zum Anlegen einer Spannung gegen eine Gegenelektrode, die zusätzlich auch die Funktion einer Referenzelektrode aufweisen kann, geschaltet. Die Schaltung ist z. B. in einem OP-Verstärker als Bipotentiostat (z. B. Metrohm Autolab Bipotentiostat PGSTAT 30) zum Einregeln der anliegenden Spannungen realisiert.

Es versteht sich, dass die angeführten Potentiale an der Steuerelektrode und der Kollektorelektrode gegenüber einer gesonderten Referenzelektrode gemessen werden können.

Der Ladungstransfermediator nimmt die Elektronen der Redoxspezies auf, sofern das Normalpotential des Ladungstransfermediators positiver ist als das Normalpotential der Redoxspezies im Elektrolyten. Umgekehrt gibt der Ladungstransfermediator Elektronen an die Redoxspezies ab, sofern das Normalpotential der Redoxspezies positiver ist als das des Ladungstransfermediators.

Der Ladungstransfermediator ist von dem zusätzlichen Isolator auf der Kollektorelektrode zwischen dieser und dem Ladungstransfermediator umgeben und bewirkt dabei vorteilhaft eine Gleichrichterfunktion. Der Isolator bewirkt, dass ein unmittelbarer Ladungstransfer zwischen der Redoxspezies und der Kollektorelektrode unterbunden wird. Ein Ladungstransfer von der Kollektorelektrode auf die Redoxspezies bzw. umgekehrt findet also nur über den Ladungstransfermediator statt. Das Zusammenspiel aus der Kollektorelektrode sowie dem hierauf angeordnetem zweiten Isolator und dem Ladungstransfermediator bewirkt bei einem vorgegebenen Potential an der Kollektorelektrode und an der Steuerelektrode, dass die Elektrodenanordnung insgesamt nicht nur als elektrochemischer Schalter zur informativen 0/1 Binärverschlüsselung betrieben werden kann, sondern zusätzlich auch eine Verstärkerfunktion aufweist.

Im Rahmen der Erfindung wurde erkannt, dass die Hg-SAM-R-R-SAM-Hg-Brücken aus dem Stand der Technik unabhängig von ihren toxischen Eigenschaften störanfällig sind. Dies liegt an der Weichheit des Materials und am Prinzip der Wechselwirkung durch unmittelbaren Kontakt der beiden Quecksilber-Flüssigkeitstropfen-Elektroden. Dies verhindert ein reproduzierbares Messergebnis. Die erfindungsgemäße Elektrodenanordnung weist hingegen wohl definierte und integrierbare Kontaktflächen an den Elektroden auf. Bei einer gegebenen Konzentration der Reaktionspartner sowie der angelegten Spannungen an die Kollektorelektrode und an die Steuerelektrode wird im Vergleich zu den aus dem Stand der Technik bekannten Metall-Molekül-Metall-Brücken ein reproduzierbarer Stromfluss erzeugt.

In einer Ausgestaltung der Erfindung sind die Steuerelektrode und die Kollektorelektrode aus demselben Material. Dies bewirkt vorteilhaft, dass die Herstellung der Elektroden auf fast identische Weise oder sogar im selben Prozess erfolgen kann.

In einer weiteren Ausgestaltung der Erfindung weist die Elektrodenanordnung eine Steuerelektrode und eine Kollektorelektrode auf, welche einen regelmäßigen Abstand von weniger als 10 µm zueinander aufweisen. Dies gewährleistet, dass die Redoxspezies leicht von einer Elektrode zur anderen zwecks erneuter Umsetzung, z. B. durch Diffusion, gelangen kann. Insbesondere können die Steuerelektrode und die Kollektorelektrode in einer interdigitierenden Struktur ineinandergreifend, mäandrierend zueinander angeordnet sein. Dies ermöglicht vorteilhaft einen schnellen Transfer einer großen Anzahl Moleküle an reduzierter bzw. oxidierter Redoxspezies zwischen der Steuerelektrode und der Kollektorelektrode, wodurch der vorgenannte Prozess bei der Realisierung elektrischer Schaltungen durch zyklische Umsetzung der Redoxspezies und Elektronentransport aufrechterhalten wird.

Das Verfahren zur Herstellung der Elektrodenanordnung kann z. B. wie folgt durchgeführt werden. Auf ein (Halbleiter-)Substrat wird eine isolierende Schicht, z. B. Siliziumoxid angeordnet. Hierzu kann vorzugsweise ein Siliziumwafer oxidiert werden. Sofern das Substrat selber bereits isolierend ist, ist dieser Schritt nicht nötig. Die Elektroden werden vorteilhaft lithographisch hergestellt, z. B. durch einen Lift-Off Prozess eines aufgebrachten Fotolackes, da diese Prozesse standardisiert sind. Die Elektroden können eine Dicke von 200 nm aufweisen und vorzugsweise aus Metall, insbesondere aus aufgedampftem Gold, bestehen. Zur besseren Adhäsion zwischen der Substrat-Isolator-Anordnung und der (Gold-)Elektrode kann ein Haftvermittler, z. B. aus Chrom oder Titan auf der Substrat-Isolator-Anordnung aufgebracht werden und zusammen mit dem Gold strukturiert werden. Die Elektroden werden vorzugsweise in ein ethanolisches Gemisch aus isolierenden Molekülen und Redoxmediatormolekülen getaucht und diese selbstorgansiert auf die Elektroden aufgebracht. Beispielhaft sei ein Gemisch aus isolierenden 1-Hexadekanthiol (HDT) und elektroaktiven Redoxmediatormolekülen, wie z. B. 11-Undekanthiol Ferrocen (Fc)) in Ethanol genannt, die kovalent an die Kollektorelektrode gebunden werden. Die Konzentration an Hexadekanthiol beträgt z. B. 1 mM und die Konzentration an 11-Undekanthiol Ferrocen beträgt ebenfalls z. B. 1 mM in Ethanol. Die Eintauchzeit beträgt in der Regel 24 Stunden, jedoch nicht kürzer als 10 Minuten. Anschließend erfolgt ein mindestens einmaliges Spülen in reinem Ethanol. Es werden vorteilhaft Monolagen der Moleküle selbstorganisiert auf die Elektroden aufgebracht. Bis zu diesem Schritt erfolgt die Herstellung der beiden Elektroden vorteilhaft in identischer Weise. Anschließend wird die Schicht aus dem zweiten Isolator nebst Ladungstransfermediator durch Elektrodesorption von der Steuerelektrode wieder entfernt. Die Desorption erfolgt in einem protonenarmen Elektrolyten, beispielsweise in einer 10 mM wässrigen Lösung von Natriumhydroxid. An die Steuerelektrode wird eine negative Desorptionsspannung angelegt von beispielsweise -1V (SCE) für mindestens 20 Sekunden. Die Kollektorelektrode bleibt unpolarisiert. Anschließend wird mit entionisiertem Wasser gespült.

Neben einer Anordnung der Kollektorelektrode und der Steuerelektrode in derselben Ebene auf dem Substrat-Isolator, können sich die Steuerelektrode und die Kollektorelektrode auch etagenartig übereinander befinden z. B. in einem Kanal. Derartige Elektroden sind durch ätzbare Opferschichten, wie Chrom, zwischen den Elektroden herstellbar. Die Steuer- und Kollektorelektrode können auch getrennt voneinander hergestellt und übereinander lagernd positioniert werden. Der Abstand zwischen den Elektroden wird dafür mit Hilfe von Mikropositionierer eingestellt.

Das Verfahren zum Betreiben einer Elektrodenanordnung sieht in besonders vorteilhafter Weise vor, dass ein Ladungstransfermediator und eine Redoxspezies im Elektrolyten mit einem jeweiligen Normalpotential gewählt werden, die in Abhängigkeit von den angelegten Spannungen zwischen der Gegenelektrode und der Steuerelektrode sowie zwischen der Gegenelektrode und der Kollektorelektrode einen Ladungstransfer entlang der Spannungsreihe, das heißt in Richtung eines jeweils positiverem E₀ zwischen den Redoxpartnern ermöglicht und am Laufen hält. Die Umsetzung der Redoxspezies an den beiden Elektroden erfolgt zyklisch und ist über die Messung des daraus resultierenden Stromes nachweisbar. Dies bedeutet, dass nach einer Oxidation an einer der beiden Elektroden die Redoxspezies an der anderen Elektrode reduziert wird. Der Zyklus der Umsetzung erfolgt dann von Neuem (zyklische Umsetzung).

Die beteiligten Redoxpartner, das heißt die Redoxspezies und der Ladungstransfermediator werden somit an der Steuerelektrode und der Kollektorelektrode durch das Anlegen geeigneter Spannungen reduziert und oxidiert.

Zwei verschiedene Verfahren zur Beschaltung der Elektrodenanordnung sind hierzu möglich. In einer ersten Ausführung des Verfahrens zur Beschaltung der Elektrodenanordnung wird durch die angelegten Spannungen an der Kollektorelektrode und an der Steuerelektrode ein Elektronentransfer von der Steuerelektrode auf die dem Elektrolyten hinzu gegebene oxidierte Redoxspezies als einleitender, aktivierender Schritt, induziert. Anschließend wird die auf diese Weise reduzierte Redoxspezies zur Kollektorelektrode transportiert und dort wieder oxidiert. Dabei erfolgt der Elektronentransfer von der Redoxspezies über den Ladungstransfermediator auf die Kollektorelektrode. In der zweiten Ausführungsform der Beschaltung wird ein Elektronentransfer durch die angelegten Spannungen von der reduzierten Redoxspezies auf die Steuerelektrode als einleitender, aktivierender Schritt induziert. Die oxidierte Form diffundiert an die Kollektorelektrode. Von der Kollektorelektrode erfolgt der Elektronentransfer sodann über den Ladungstransfermediator auf die oxidierte Redoxspezies.

In der ersten Ausgestaltung des Verfahrens wird hierzu eine Redoxspezies mit einem negativeren Normalpotential als das des Ladungstransfermediators in oxidierter Form zum Elektrolyten hinzugegeben. Es kann, z. B. die Redoxspezies Hexocyanoferrat mit dem Redoxpaar Hexacyanoferrat (II) / Hexacyanoferrat (III), im weiteren mit Ferro II / Ferri III bezeichnet, gewählt werden. Dessen Normalpotential liegt bei etwa 0,2 V (SCE). Als Ladungstransfermediator kann in diesem Fall z. B. 11-Undekanthiol Ferrocen (Fc) mit einem Normalpotential von etwa 0,34 V (SCE) gewählt werden.

In der zweiten Ausgestaltung des Verfahrens, wird eine Redoxspezies mit einem positiveren Normalpotential als das des Ladungstransfermediators, z. B. ein Iridat mit dem Redoxpaar Iridiumhexachlorid (III) / Iridiumhexachlorid (IV), im Weiteren mit Iridat III / Iridat IV bezeichnet, als Redoxspezies ausgewählt und in reduzierter Form dem Elektrolyten hinzugegeben. Das Normalpotential dieser Redoxspezies liegt bei etwa 0,71 V (SCE). Zu einem alternativen Beschaltungsverfahren führt die Verwendung von Iridat III / IV im Vergleich zu dem mit Hexocyanoferrat, wenn ein Ladungstransfermediator mit einem negativeren Normalpotential als das von Iridat III / IV gewählt wird, z. B. 11-Undekanthiol Ferrocen (Fc) (0,34 V, SCE).

Die Redoxspezies wird im ersten Verfahren also in oxidierter Form zum Elektrolyten zugegeben, z. B. als Ferri III und im zweiten Verfahren in der reduzierten Form, z. B. als Iridat III.

In der ersten Ausführungsform des Verfahrens werden durch die Spannungsquellen über den OP-Verstärker Spannungen so zwischen der Gegenelektrode und der Steuerelektrode bzw. zwischen der Gegenelektrode und der Kollektorelektrode angelegt, dass an der Steuerelektrode ein Potential negativer, als das Normalpotential der Redoxspezies und an die Kollektorelektrode konstant ein Potential positiver als das Normalpotential des Ladungstransfermediators anliegt. Hierdurch wird vorteilhaft bewirkt, dass die oxidierte Form der Redoxspezies zunächst an der Steuerelektrode durch eine Reduktion aktiviert wird. Der weitere Ladungstransfer erfolgt dann nach der Diffusion der Redoxspezies im Elektrolyten an die Kollektorelektrode. Der Ladungstransfer findet statt zwischen der reduzierten Form der Redoxspezies auf den Ladungstransfermediator und von dort auf die Kollektorelektrode. Die Kollektorelektrode weist das positivste Potential aller beteiligten Redoxpartner auf. Durch die Oxidation der Redoxspezies am Ladungstransfermediator wird das Ausgangsprodukt, das heißt die Redoxspezies in oxidierter Form wieder bereit gestellt. Die zyklische Umsetzung der Redoxspezies beginnt nach der Diffusion an der Steuerelektrode erneut.

In der zweiten Ausführungsform des Beschaltungsverfahrens wird eine Redoxspezies mit einem positiveren Normalpotential als das Normalpotential des Ladungstransfermediators zum Elektrolyten hinzugegeben, z. B. ein Iridiumhexachlorid, mit dem Redoxpaar Iridat III / Iridat IV. Die Redoxspezies wird in der reduzierten Form zum Elektrolyten zugegeben, z. B. als Iridat III. An der Kollektorelektrode wird konstant ein Potential negativer als das Normalpotential des Ladungstransfermediators angelegt und an die Steuerelektrode ein Potential positiver als das Normalpotential der Redoxspezies Iridat. Hierdurch wird vorteilhaft bewirkt, dass die reduzierte Form der Redoxspezies zunächst an der Steuerelektrode durch Oxidation aktiviert wird. Zudem bewirkt die Tatsache, dass das Potential an der Kollektorelektrode negativer ist als das Normalpotential des Ladungstransfermediators, vorteilhaft, dass Elektronen von der Kollektorelektrode ausgehend über den Isolator zum Ladungstransfermediator übertragen werden. Der Ladungstransfermediator wird hierdurch reduziert. Da das Normalpotential der Redoxspezies positiver ist als das Normalpotential des Ladungstransfermediators, erfolgt nach der Diffusion der Redoxspezies an die Kollektorelektrode am Ladungstransfermediator die Reduktion der Redoxspezies, im Falle von Iridat IV zu Iridat III. Der Ladungstransfermediator wird oxidiert. Die reduzierte Redoxspezies, z. B. Iridat III, diffundiert wieder zur Steuerelektrode mit positivstem Potential und wird dort erneut oxidiert. Der Zyklus beginnt so von Neuem.

Der auf der Kollektorelektrode angeordnete Isolator zwischen der Elektrode und dem Ladungstransfermediator verhindert einen unmittelbaren Ladungstransfer zwischen der Redoxspezies und der Kollektorelektrode.

Die Elektrodenanordnung kann durch Modulation der Spannung an der Steuerelektrode als elektrochemischer Schalter und Transistor betrieben werden, mit dem in Abhängigkeit von den angelegten Spannungen an der Kollektorelektrode und der Steuerelektrode ein Stromfluss ein- und ausgeschaltet sowie verstärkt werden kann. Es versteht sich, dass mit der Elektrodenanordnung durch das Abfahren der Potentialfenster an der Steuerelektrode die Verstärkerfunktion realisiert wird. Die Elektrodenanordnung kann daher als elektrochemischer Transistor betrieben werden.

Hierfür wird in der ersten Ausführungsform des Beschaltungsverfahrens das Potential an der Kollektorelektrode konstant positiver als das Normalpotential der Redoxspezies eingestellt. Die Spannung U an der Steuerelektrode wird von einem positiveren Wert ausgehend in Richtung eines kathodischen, das heißt negativeren Potentials als das Normalpotential der Redoxspezies hinweg moduliert. Sobald die Spannung an der Steuerelektrode ungefähr das Normalpotential der Redoxspezies erreicht und darüber hinaus in Richtung kathodisches, das heißt negativeres Potential verschoben wird, wird der Strom an der Kollektorelektrode verstärkt. Der sich verstärkende Strom kann in eine sich verstärkende Spannung umgewandelt werden, z. B. über einen definierten Widerstand.

Im zweiten Ausführungsbeispiel wird die Spannung an der Kollektorelektrode konstant negativer als das Normalpotential des Ladungstransfermediators und der Redoxspezies eingestellt. Dann wird an die Steuerelektrode die Spannung U von einem zunächst negativeren Wert als das Normalpotential der Redoxspezies sukzessive in Richtung des Normalpotentials der Redoxspezies moduliert. Sobald die Spannung an der Steuerelektrode das Normalpotential der Redoxspezies erreicht und darüber hinaus in Richtung anodisches, das heißt positiveres Potential verschoben wird, wird das Signal verstärkt.

Geringe Modulationen der Spannungen der Steuerelektrode erzielen dabei einen großen Verstärkungseffekt.

In beiden Ausführungsformen erfolgt der Ladungstransfer entlang der Spannungsreihe in Richtung eines jeweils positiveren Normalpotentials (E₀) der beteiligten Redoxpartner. Der Ladungstransfer findet immer dann statt, wenn der Ladungsträger von der Quelle zum Endpunkt kontinuierlich in Zustände niedrigerer Energie gelangt. Die einzelnen Zustände sind durch Barrieren voneinander getrennt, die durch Tunnelprozesse oder durch Feldemission überwunden werden müssen.

Es ist im ersten Verfahren zur Beschaltung der Elektrodenanordnung nicht möglich eine reduzierte Form und im zweiten Verfahren nicht möglich eine oxidierte Form einer Redoxspezies zum Elekrolyten hinzu zu gegeben. Dann würde während der ersten Ausführungsform, z. B. mit Ferro II anstelle von Ferri III, der durch Ladungstransfer beginnende Elektronentransport durch die Anwesenheit der reduzierten Form der Redoxspezies ohne Einfluss der Steuerelektrode unmittelbar an der Kollektorelektrode induziert. Die im Vergleich zur Konzentration des Moleküls nachfolgende zyklische Aktivierung von vergleichsweise wenigen Molekülen der Redoxspezies an der Steuerelektrode würde nur zu einem sehr geringen Unterschied der im Nachgang gemessenen Spannung an der Kollektorelektrode führen, so dass ein Schaltvorgang oder eine Erkennungsreaktion nicht mehr sicher nachweisbar wäre. Im zweiten Alternativverfahren würde der Ladungstransfer unmittelbar ohne Einfluss der Steuerelektrode von der Kollektorelektrode über den Ladungstransfermediator auf die Redoxspezies erfolgen. Alle Einstellungen der Spannungen an der Steuerelektrode und der Kollektorelektrode erfolgen über die Gegenelektrode, z. B. einen Platindraht.

Für die Funktion als elektrochemischer Schalter wird in den beiden genannten Verfahren zur Beschaltung der Elektrodenanordnung ein oberer und ein unterer Grenzstrom festgelegt, bei dessen Überschreiten oder Unterschreiten der Ladungstransfer an der Kollektorelektrode als ein bit mit positivem (Eins) oder negativem Ereignis (Null) festgelegt wird. Dies ist für Schaltungsfunktionen zur Kodierung der Information notwendig. Die Erfindung ist damit geeignet, elektrische Schaltfunktionen auszuführen. Dafür wird die Spannung der Kollektorelektrode auf einen festen Wert eingestellt und der Strom als Signal gemessen. Durch die Modulation der Spannungen an der Steuerelektrode auf Werte oberhalb und unterhalb des Normalpotentials der Redoxspezies kann der Ladungstransfer und Strom an der Kollektorelektrode wahlweise transistorartig verstärkt werden. Somit kann Strom aus- und angeschaltet werden, um Informationen zu kodieren. Die Funktion ist abhängig von der Redoxspezies in der Umgebung der Elektroden, der Natur des Ladungstransfermediators an der Kollektorelektrode, der Konzentration der Redoxspezies und der angelegten Spannung an der Kollektorelektrode und an der Steuerelektrode.

Die Beschaltung der Elektrodenanordnung und der Nachweis des Unter- oder Überschreitens der Grenzströme an den Elektroden werden vorteilhaft computerprogrammgestützt vorgenommen und abgespeichert.

Alle Ladungstransportprozesse finden über diskrete Redoxzustände der Redoxpartner statt. Die schaltende Funktion erfolgt durch eine wenige Nanometer dicke, auf dem Isolator angeordnete Schicht des Ladungstransfermediators. Der Ladungstransfermediator steht in Kontakt mit der Redoxspezies im Elektrolyt. Die Elektroden, der Ladungstransfermediator und die Redoxspezies sind dabei durch Energiebarrieren voneinander getrennt. Die Kollektorelektrode weist mit dem Isolator und dem Ladungstransfermediator darüber die Gleichrichterfunktion und die Steuerelektrode die Steuerfunktion bei der Bereitstellung der Redoxspezies auf. Die Transportstrecke der Ladungen bzw. die Ausdehnung der Barriere ist in der Regel kürzer als 10 nm. Der Ladungstransport erfolgt daher im Wesentlichen über Tunnelprozesse und Feldemission.

Sofern die Elektrodenanordnung einen Sensor darstellen soll, ist der Ladungstransfer bevorzugt nur zwischen einer bestimmten Redoxspezies und einem bestimmten Ladungstransfermediator möglich, z. B. aufgrund von Erkennungsreaktionen nach dem Schlüssel-Schloss-Prinzip oder sterischen Gegebenheiten der beteiligten Moleküle. Hierfür können insbesondere Enzyme und Ihre Substrate verwendet werden. Die Erfindung dient dann der Erkennung und des Nachweises einer spezifischen Redoxspezies in Lösung. Dann bilden das sensorische und das Signalwandlungssystem eine Einheit. Auch dafür wird eine molekulare Schicht an die Kollektorelektrode angekoppelt, die sich aus isolierenden und elektrisch aktiven Ladungstransfermediatoren zusammen setzt.

Die elektrisch aktiven Ladungstransfermediatormoleküle können auch durch redoxaktive anorganische Verbindungen ersetzt werden.,

### Ausführungsbeispiele:

Im Weiteren wird die Erfindung an Hand von Ausführungsbeispielen für die Elektrodenanordnung (Figuren 1 bis 3 sowie Tabelle 1) und zweier Verfahren zur Beschaltung an Hand der beigefügten Figuren näher beschrieben, ohne dass es dadurch zur Einschränkung der Erfindung kommen soll.

Es zeigen:
- Figur 1:: Die Steuerelektrode.
- Figur 2:: Die Kollektorelektrode.
- Figur 3:: Elektrodenaufbau im Querschnitt (a.) und als Blockschaltbild (b.).
- Figur 4:: Interdigitierendes Elektrodenfeld.
- Figur 5:: Verstärkungseffekt: Abhängigkeit der Spannung in Abhängigkeit vom Strom an der Kollektorelektrode bei Modulation der Spannung an der Steuerelektrode in Verfahren 1.
- Figur 6:: Verstärkungseffekt: Abhängigkeit der Spannung in Abhängigkeit vom Strom an der Kollektorelektrode bei Modulation der Spannung an der Steuerelektrode in Verfahren 2 (invertiert).
- Figur 7:: Schaltfunktion zur Informationsverschlüsselung.

Alle angeführten Potentiale an den Elektroden sind gegenüber einer gesonderten Referenzelektrode gemessen worden (SCE). Die Potentiale sind relativ zu einer gesättigten Calomelelektrode (SCE) angegeben.

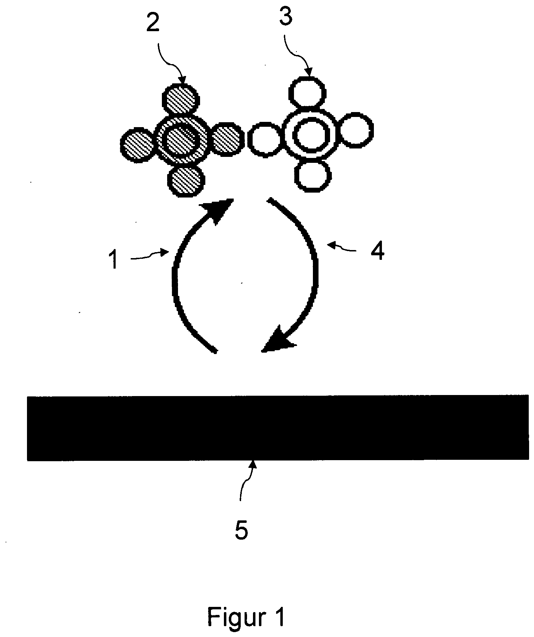

Figur 1 zeigt einen möglichen Teilprozess an der Steuerelektrode 5 nach der ersten Ausführungsform des Verfahrens zur Beschaltung. Die Steuerelektrode besteht aus Gold, welches auf einem isolierenden Substrat (nicht dargestellt) angeordnet ist. Die Goldelektrode 5 wird lithographisch durch einen Lift-Off Prozess eines Fotolackes nach Standardprozessen hergestellt. Die Steuerelektrode 5 besitzt im Gegensatz zur Kollektorelektrode keine weitere Molekülschichten aus Isolator und Ladungstransfermediator hierauf. Die Steuerelektrode aktviert direkt die in oxidierter Form hinzu gegebene Redoxspezies 2, hier Ferri III, und zwar durch den Reduktionsschritt 1. Hierzu wird über eine nicht dargestellte Gegenelektrode an die Steuerelektrode ein Potential negativer als das Normalpotential der Redoxspezies Hexocyanoferrat angelegt. Durch Ladungstransfer von der Steuerelektrode 5 zu Ferri III wird dieses zu Ferro II 3 reduziert.

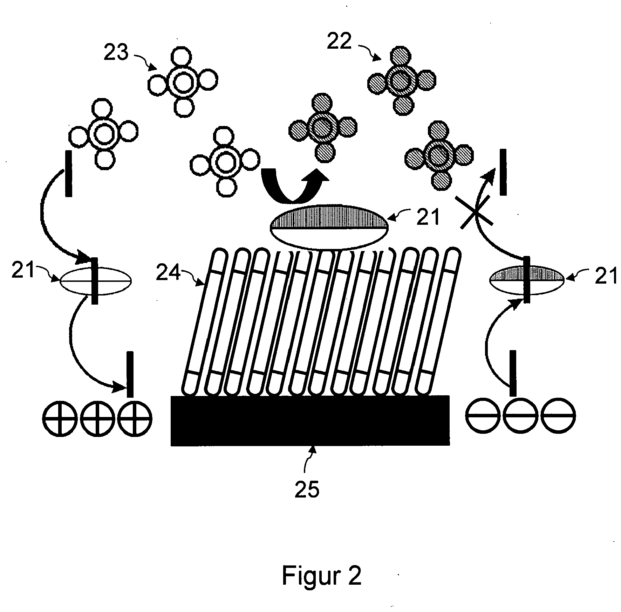

Ferro II 3 kann theoretisch durch einen Oxidationsschritt 4 an der Steuerelektrode 5 in Figur 1 wieder deaktiviert werden. Dabei würde ein Ladungstransfer von Ferro II zur Steuerelektrode 5 auftreten und wieder Ferri III entstehen. Im ersten Beschaltungsverfahren der Elektrodenanordnung ist dies durch das Anlegen einer Spannung von der Gegenelektrode (nicht dargestellt) an die Steuerelektrode 5 negativer als das Normalpotential der Redoxspezies Hexocyanoferrat verhindert, so dass Ferro II 3 nur zur Kollektorelektrode diffundieren kann und dort über den Ladungstransfermediator zu Ferri III oxidiert werden kann, siehe Figur 2.

Die Kollektorelektrode 25 besteht hierzu ebenfalls aus Gold. Die Kollektorelektrode 25 ist mit einer selbsorganisierten Monolage eines Gemisches aus isolierenden Molekülen 24, hier Hexandekanthiol (HDT) und elektroaktiven Redoxmediatormolekülen 21, hier z. B. 11-Undekanthiol Ferrocen (Fc), versehen. Der Ladungstransfermediator weist ein Normalpotential von etwa 0,34 V auf. Die Ferrocen-Gruppe kann reduziert und oxidiert werden, während das Undekanthiol und das Hexandekanthiol selbstorganisiert auf der Elektrode angeordnet sind.

Als Redoxspezies kann das Redoxpaar Ferro II / Ferri III (Normalpotential: 0,23 V) oder im alternativen Verfahren auch Iridat (Normalpotential: 0,71 V) verwendet werden. Das Redoxpaar Ferro II / Ferri III weist ein negativeres Normalpotential als 11-Undekanthiol Ferrocen (Fc) auf. Das Redoxpaar Iridat III / Iridat IV weist ein positiveres Normalpotential als 11-Undekanthiol Ferrocen (Fc) auf. Entsprechend muss für einen zyklischen Ladungstransfer die Spannung nach den beiden Ausführungsformen der Beschaltung an der Steuerelektrode und Kollektorelektrode über die Gegenelektrode angepasst werden und die Diffusion der Redoxspezies zwischen den Elektroden gewährleistet sein. Die Funktionen als elektrochemischer Schalter und als Transistor werden wie folgt realisiert.

### Erstes Ausfuhrungsbeispiel zur Beschaltung: Das Normalpotential der Redoxspezies ist negativer als das Normalpotential des Ladungstransfermediators (Figur 2)

Das oxidierte Ferri III wird dem Elektrolyten, hier PBS (pH 5,6) zugegeben. An die Steuerelektrode wird über die Gegenelektrode eine Spannung niedriger als das Normalpotential von Hexocyanoferrat angelegt. Ferri III wird zu Ferro II an der Steuerelektrode reduziert, siehe Figur 1. Ferro II diffundiert an die Kollektorelektrode 25. Die Kollektorelektrode ist wie die Steuerelektrode auf dem isolierenden Substrat (nicht dargestellt) angeordnet.

Ferro II 23 wird an der Kollektorelektrode über den Ladungstransfermediator 11-Undekanthiol Ferrocen (Fc) 21 zu Ferri III 22 oxidiert, da das Potential des Ladungstransfermediators positiver ist als das Normalpotential der Redoxspezies (Spannungsreihe). Ferri III 22 selber kann mit dem Mediator 21 keine weiteren Ladungen austauschen, da der Ladungstransfer immer nur dann statt findet, wenn der Ladungsträger von der Quelle zum Endpunkt kontinuierlich in Zustände niedrigerer Energie gelangt. In Figur 2 ist dies durch den durchgestrichenen Pfeil dargestellt. Der Ladungstransfer erfolgt dann ferner vom Ladungstransfermediator 21 über den Isolator 24 auf die Goldelektrode 25, da dort ein Potential positiver als das der Redoxspezies und des Ladungstransfermediators über die Gegenelektrode (nicht dargestellt) angelegt ist. Nach der Oxidation zu Ferri III 22 diffundiert dieses wieder zur Steuerelektrode und der Prozess erfolgt von Neuem.

Die Energiebarrieren sind in Figur 2 durch senkrechte, dicke Balken angegeben und zeigen, dass bei den genannten Normalpotentialen der Redoxpartner Hexocyanoferrat und 11-Undekanthiol (Fc), sowie der angelegten Spannung an der Kollektorelektrode 25 positiver als der Ladungstransfermediator ein Ladungstransfer von der Kollektorelektrode 25 auf den Ladungstransfermediator nicht möglich ist.

### Zweites Ausführungsbeispiel zur Beschaltung: Das Normalpotential der Redoxspezies ist positiver als das Normalpotential des Ladungstransfermediators

Der Ablauf des Ladungstransfers erfolgt nach den gleichen Mechanismen zu den Figuren 1 und 2 völlig entgegengesetzt. In der zweiten Ausführungsform wird die reduzierte Form Iridat III zum Elektrolyten, hier 0,1 M Perchlorsäure zugegeben. Das Redoxpaar Iridat III / Iridat IV weist das Normalpotential von etwa 0,7 V auf, welches positiver ist, als das Normalpotential des Ladungstransfermediators 11-Undekanthiol Ferrocen (Fc)) (0,34 V). Ein entgegengesetzt zu den Figuren 1 und 2 verlaufender Ladungstransfer lässt sich dann wie folgt erzielen. Iridat III diffundiert zur Steuerelektrode. An diese ist über die Gegenelektrode eine Spannung positiver als das Normalpotential von Iridat III / Iridat IV, z. B. 0,8 V, angelegt. Daher erfolgt der Ladungstransfer von Iridat III auf die Steuerelektrode. Dabei wird Iridat IV gebildet. Dieses kann auf Grund der angelegten Spannung an die Steuerelektrode keine Ladungen von dieser aufnehmen. Iridat IV diffundiert vielmehr an die Kollektorelektrode. An die Kollektorelektrode wird über die an den Bipotentiostaten im OP-Verstärker angeschlossene Gegenelektrode eine Spannung von konstant kleiner als 0,34 V, dem Normalpotential des Ladungstransfermediators, angelegt. Dann erfolgt über einen Tunnelprozess der Ladungstransfer von der Kollektorelektrode über den Isolator auf den Ladungstransfermediator 11-Undekanthiol Ferrocen (Fc)). Dieser wird reduziert. An der Oberfläche der Kollektorelektrode wird die oxidierte Form Iridat IV zu Iridat III durch den Ladungstransfermediator reduziert, wodurch der Ladungstransfermediator 11-Undekanthiol Ferrocen (Fc)) oxidiert wird. Ein Ladungstransfer von Iridat III zurück auf die Kollektorelektrode ist aus thermodynamischen Gründen und der angelegten Spannung an die Kollektorelektrode nicht möglich. Iridat III diffundiert vielmehr an die Steuerelektrode, wo auf Grund der Spannung an der Steuerelektrode der Prozess des zyklischen Ladungstransports von Neuem beginnt.

Die Konzentrationen an Ferri III und Iridat III in den beiden Verfahren betragen jeweils etwa 1 mM im Elektrolyten. Über die konstant an der Kollektorelektrode angelegte Spannung und durch Modulation der Spannung an der Steuerelektrode kann der Stromfluss unterbrochen oder in Gang gesetzt werden. Für das erste Beschaltungsverfahren erfolgt messbare Spannung erst, wenn das Potential an der Steuerelektrode negativer ist als das Normalpotential der Redoxspezies. Für das zweite Beschaltungsverfahren erfolgt messbare Spannung erst, wenn das Potential an der Steuerelektrode positiver ist als das Normalpotential der Redoxspezies.

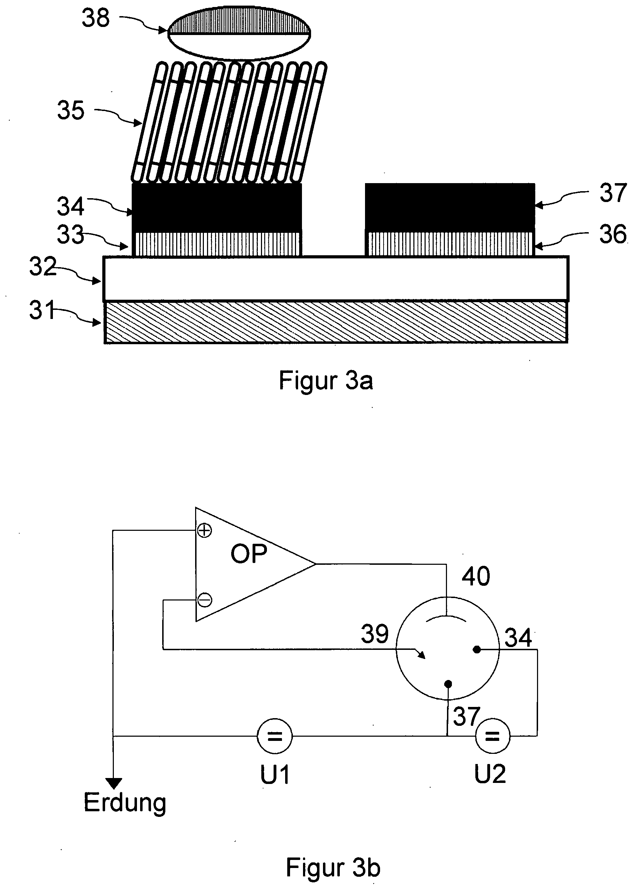

Figur 3a zeigt schematisch in der Seitenansicht die Steuerelektrode 36, 37 und die Kollektorelektrode 33, 34, 45. Beide Elektroden sind auf einem Substrat aus einem Siliziumwafer mit <110> Orientierung 31 und SiO₂-Schicht 32 angeordnet. Die SiO₂-Schicht ist 400 nm dick und wurde durch Nassoxidation aufgewachsen. Beide Elektroden werden lithographisch hergestellt, hier durch einen Lift-Off Prozess eines Fotolackes nach Standard. Die Gold-Elektroden 34, 37 haben je eine Dicke von 200 nm. Zur besseren Adhäsion zwischen dem Substrat 31, 32 und den Elektroden ist jeweils ein Haftvermittler 33, 36 aufgebracht worden, der aus 10 nm Chrom oder Titan besteht und zusammen mit dem Gold strukturiert wird. Eine Schicht-Struktur aus dem Isolator Hexandekanthiol (HDT) 35 und elektroaktiven Redoxmediatormolekülen 11-Undekanthiol Ferrocen (Fc) 38 wird auf beiden Gold-Elektroden angeordnet. Eine Monolage der Moleküle wird durch ein Selbstorganisationverfahren aus einer ethanolischen Lösung heraus auf die Elektroden zeitgleich aufgebracht und anschließend durch Elektrodeposition von der Steuerelektrode 37 wieder entfernt. Beide Elektroden werden gegen die Gegenelektrode 40 geschaltet. Figur 3b gibt das Schaltbild der Elektrodenanordnung an. Der OP-Verstärker umfasst einen Computer. Bezugszeichen 39 gibt die Referenzelektrode Ag/AgCl₂, Bezugszeichen 40 ist die Gegenelektrode und die Bezugszeichen 34 und 37 sind die Kollektorelektrode und die Steuerelektrode. Ein Ende des Drahts der Gegenelektrode ist an einem Bipotentiostaten mit vier elektrischen Eingängen (z. B. Metrohm Autolab Bipotentiostat PGSTAT 30) angeschlossen, der die Funktion eines OP-Verstärkers erfüllt. Das andere Ende ist in den Elektrolyten eingetaucht. Zudem ist die Referenzelektrode (z. B. SCE) an den Bipotentiostaten angeschlossen. Im Bild des OP-Verstärkers entspricht dies dem negativen Eingang des OP-Verstärkers, der vorzugsweise geerdet ist. Die Steuer- und Kollektorelektrode werden an die beiden verbleibenden Eingänge des Bipotentiostaten angeschlossen. Im Bild des OP-Verstärkers entspricht dies dem positiven Eingang des Operationsverstärkers. Der Bipotentiostat verfügt über zwei Spannungsquellen, mit deren Hilfe die Spannungen zwischen der Gegenelektrode und der Kollektorelektrode bzw. zwischen der Gegenelektroden und der Steuerelektrode eingestellt werden können. Die Spannungsquellen sind zwischen dem positiven Eingang des OP-Verstärkers und der Steuer- und Kollektorelektrode geschaltet. Wird die Spannung zwischen der Gegenelektrode und der Steuerelektrode bzw. zwischen der Gegenelektrode und der Kollektorelektrode variiert, so wird ein Strom an der Steuer- bzw. Kollektorelektrode erzeugt, der dem Verhältnis der Spannung und der zugehörigen Impedanz zwischen der Gegenelektrode und der Steuer- bzw. Kollektorelektrode entspricht. Der Strom an der Kollektorelektrode bzw. an der Steuerelektrode, der aus Variation der Spannungen resultiert, kann separat über Strommessgeräte verfolgt werden (z. B. direkt integriert in Metrohm Autolab Bipotentiostat PGSTAT 30).

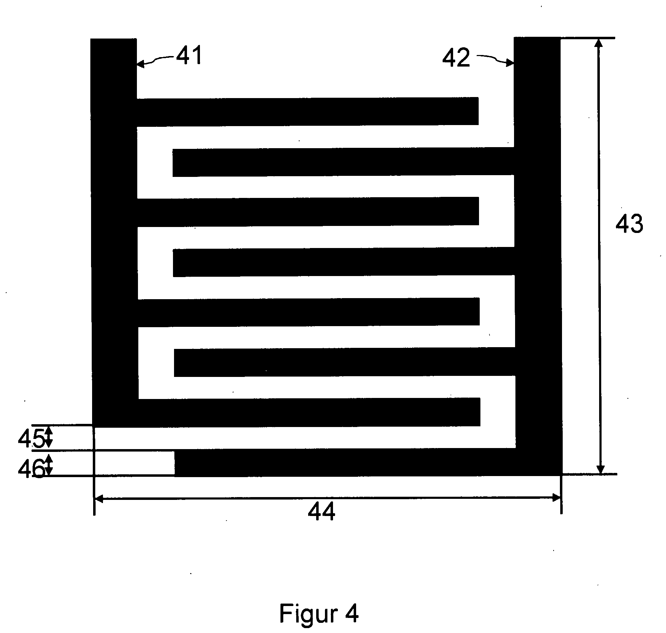

Ein interdigitierendes Elektrodenfeld aus einer Kollektorelektrode 41 und einer Steuerelektrode 42 ist in der Figur 4 schematisch in Aufsicht gezeigt. Die Redoxspezies (nicht dargestellt) kann zwischen den beiden Elektroden hin- und her diffundieren. Die Steuer- und die Kollektorelektrode liegen sich mit einem Abstand 45 von typischerweise kleiner als 10 µm gegenüber, vorliegend mit etwa 2 µm. Der Abstand 45 korreliert direkt mit der Ansprechzeit der Schaltprozesse in der Art, dass kurze Abstände kurze Ansprechzeiten und somit Schaltzeiten bedingen. Die Elektroden haben eine Breite 46, die in etwa so groß ist, wie der Abstand 45 (2 µm). Die Breite der Elektroden kann aber auch bis zu einem Faktor 10 oder mehr größer sein, ohne die Funktionsweise der Erfindung zu beeinträchtigen. Die Breite 46 der Elektroden sollte nicht kleiner sein als der Abstand der Elektroden zueinander, da sonst die Ansprechzeiten verlängert werden. Die Elektroden weisen in der Regel deutlich größere Längen 43 und 44 als Breiten 46 auf. In diesem Beispiel liegen sich die Elektroden mäanderförmig gegenüber. Auf diese Weise wird die Elektrodenfläche vergrößert und somit die Empfindlichkeit verbessert.

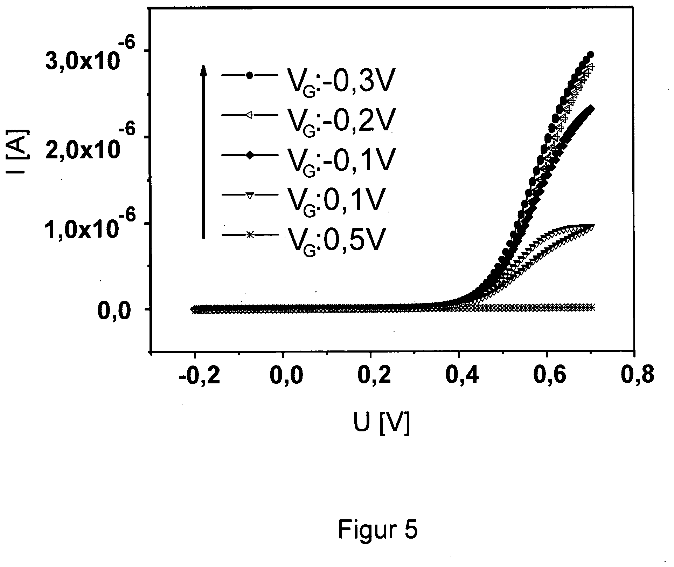

Figur 5 zeigt für das erste Beschaltungsverfahren den Strom I an der Kollektorelektrode in Abhängigkeit vom Potential U an der Kollektorelektrode in Phosphatpuffer (PBS, pH 5,6). Wird die Spannung an der Steuerelektrode (V_{G}) moduliert und über das Normalpotential von Ferri III / Ferro II hinweg in Richtung kathodischere (negativere) Potentiale verschoben, so steigt der anodische Grenzstrom der Kollektorelektrode an, da zunehmend mehr aktiviertes Ferro II zur Verfügung steht. An die Kollektorelektrode wird hierzu eine positivere Spannung als das Normalpotential des Ladungstransfermediators angelegt. Der elektrochemische Schalter zeigt transistorisches Verhalten.

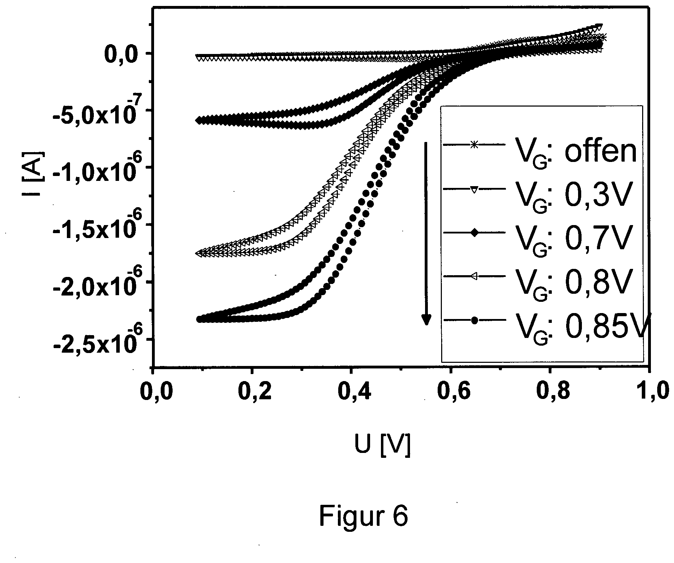

Figur 6 zeigt für das zweite Beschaltungsverfahren den Strom an der Kollektorelektrode I in Abhängigkeit vom Potential U an der Kollektorelektrode in 0,1 M Perchlorsäure. Wird die Spannung an der Steuerelektrode (V_{G}) moduliert, das heißt über das Normalpotential von Iridat III / Iridat IV hinweg in Richtung anodischere (positivere) Potentiale verschoben, so steigt der Grenzstrom der Kollektorelektrode an, da zunehmend mehr aktiviertes Iridat IV zur Verfügung steht. Die Invertierung der Kennlinie gegenüber Figur 5 ergibt sich somit durch Austausch des Redoxpaars Ferri III / Ferro II mit Iridat III / Iridat IV.

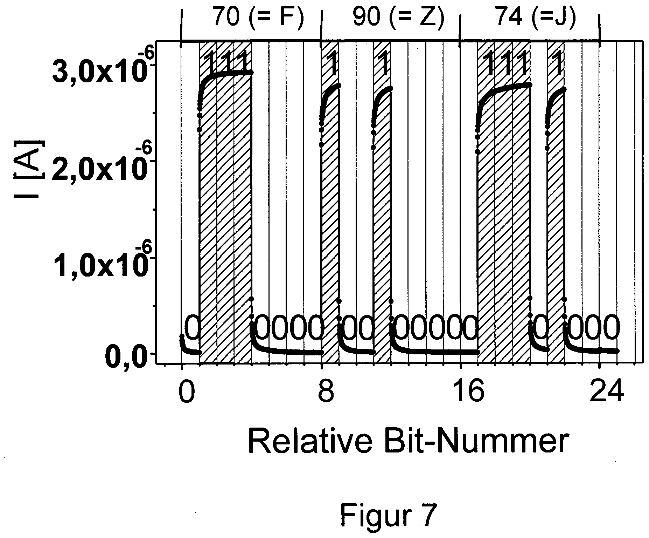

Figur 7 zeigt die chronoamperometrische Schaltfunktion des elektrochemischen Transistors. Dargestellt ist ein 24 Bit Binärcode zur Verschlüsselung von FZJ in PBS (phosphatgepufferte Salzlösung) (pH 5,6). Jeder Buchstabe entspricht 8 Bits. Strom größer als 2,5 µA wird als 1 gewertet und Strom kleiner als 0,25 µA bedeutet 0. Der Binärcode wurde zusätzlich in den Hexadezimalcode zur Verschlüsselung der sich aus dem Binärcode ergebenden Zahlen 70 für F, 90 für Z und 74 für J transferiert.

Das Potential der Steuerelektrode beeinflusst, wie viele Ferri III Moleküle zu Ferro II an der Steuerelektrode aktiviert werden. Befindet sich das Potential der Steuerelektrode mehr anodisch (positiver) als das Normalpotential von Ferri III, dann wird kein Ferri III zu Ferro II aktiviert. Bei Erreichen des Normalpotentials von Ferri III an der Steuerelektrode steigt die Menge an aktiviertem Ferro II stark an und geht in eine Sättigung über. Damit steigt der anodische Kollektorgrenzstrom, wenn die Steuerelektrode das Normalpotential von Ferro II / Ferri III unterschreitet, siehe Figur 5. Das Ein- und Ausschalten der Aktivierung von Ferri III zu Ferro II an der Steuerelektrode 5 über dessen Elektrodenpotential kontrolliert daher den Strom an der Kollektorelektrode, siehe Figur 5. Die Schaltfunktion wird zur binären Kodierung von Informationen genutzt. Schaltet die Steuerelektrode 5 auf ein Elektrodenpotential mehr anodisch (positiver) als das Normalpotential des Redoxpaars Ferri III / Ferro II, so wird kein Kollektorstrom gemessen. Dies entspricht "Strom aus", also Binärcode 0, siehe Figur 7. Schaltet die Steuerelektrode auf ein Elektrodenpotential mehr kathodisch (negativer) als das Normalpotential des Redoxpaars von Ferri III / Ferro II, so wird ein Kollektorstrom gemessen. Dies entspricht "Strom an", also Binärcode 1. Umgekehrt kann durch ein Potential der Kollektorelektrode mehr kathodisch (negativer) als das Normalpotential des Transfermediators, Elektronen von Ferro II nicht an die Kollektorelektrode weitergeleitet werden und der Strom fällt auf einen 0-Grenzstrom ab, der durch Rauschen und parasitären Komponenten bestimmt wird. Wurde Ferro II 23 an der Kollektorelektrode 25 zu Ferri III 22 hingegen deaktiviert, so können diese Moleküle wieder zur Steuerelektrode diffundieren und dort zu Ferro II reaktiviert werden.

Auf diese Weise lassen sich Informationen kodieren, siehe Figur 7. Der Kollektorstrom hängt dabei maßgeblich von der Konzentration der Redoxspezies in der Lösung ab.

Die Arbeitsrichtung gemäß dem alternativen Beschaltungsverfahren dieses elektrochemischen Transistors kann einfach umgekehrt werden, wenn anstatt eines Oxidationsmittels als Redoxspezies ein Reduktionsmittel zugegeben wird. Dessen Normalpotential muss mehr anodisch (positiver) sein als das Normalpotential des Mediators, Figur 6. Die Richtung des Ladungstransfers ist hier umgekehrt zu Figur 5.

### Weitere Ausführungsbeispiele:

Es versteht sich, dass die Wahl der Redoxspezies und des Ladungstransfermediators sowie die hieraus resultierenden Normalpotentiale sowie auch die angelegten Spannungen lediglich beispielhaft und nicht einschränkender Natur sind. Es versteht sich ferner, dass der Begriff Ladungstransfer zwischen den Redoxpartnern gleichbedeutend ist mit einer Redoxreaktion zwischen eben diesen.

Dies gilt auch für die nachfolgenden Ausführungsbeispiele, in denen wie in den vorangegangenen Ausführungsbeispielen eine Monolage von Hexandekanthiol auf die Kollektorelektrode angeordnet wurde.

Alle Prozessierungsschritte sind identisch zu den vorangegangenen Ausführungsbeispielen.

**Tabelle 2: Weitere Ausführungsbeispiele zu verschiedenen Kombinationen aus Substrat, Ladungstransfermediatoren und Redoxspezies.**

| | Kollektorelektrode | Steuerelektrode | Ladungstransfermediator | Redoxspezies | Substrat |
|---|---|---|---|---|---|
| 1 | Leitfähiger Polymer (PEDOT, PEDOT/PSS, Polyanilin) | Leitfähiger Polymer (PEDOT, PEDOT/PSS, Polyanilin) | Anthracene E₀=--1,92V | Ce(IV) + *e* ±/ Ce(III), E₀=1,3V | AlOx |
| 2 | Dotierter Diamant | Dotierter Diamant | Tetramethyl-p-phenylenediamine E₀=0,3V | Sn(IV) + *2e* */ Sn(II), E₀=-0,1V V | Glas |
| 3 | Kohlenstoff sp2 hybridisiert (Graphit, Kohlenstoffnanoröhrchen, Graphen) | Kohlenstoff sp2 hybridisiert (Graphit, Kohlenstoffnanoröhrchen, Graphen) | Tetrathiafulvalene -1/-2 E₀=0,66V 0/-1 E₀=0,3V | Ru(NH3)₆³⁺ /Ru(NH3 )₆²⁺ E₀=-0,14+ | Kunststoffe (Plexiglas, PP, PE, PS, Silikone, Polyolefine) |
| 4 | Elementhalbleiter (Silizium, Ge) | Elementhalbleiter (Si, Ge) | Thianthrene +1/+2 E₀=1,7V 0/+1 E₀=1,23V | Ferrocen II /Ferrocen III E₀=0,31 V | Undotierter Diamant |
| 5 | Verbindungshalbleiter (GaAs, GaP, InP) | Verbindungshalbleiter (GaAs, GaP, InP) | Tetracyanoquinodimethane -1/-2 E₀=-0,29V 0/-1 E₀=0,13V | Ru(bpy)₃²⁺ / Ru(bpy)₃³⁺ E₀=1,32V | |
| | | | | Ru(bpy)₁²⁺ / Ru(bpy)₃¹⁺ E₀=-1,3V | |
| 6 | ITO | ITO | viologen dication V2+ / radikal Kation V+· E₀=-0,42V | Dopamin E₀=0,07 V | |
| 7 | Metalle (Ag, Pt, Cu, Pd) | Metalle (Ag, Pt, Cu, Pd) | Benzoquinone -1/-2 E₀=-1,4V 0/-1 E₀=-0,54V | Benzoquinone -1/-2 E₀=-1,4V 0/-1 E₀=-0,54V | |
| 8 | | | Pyrroloquinoline Quinon modifizierte Glukoseoxidase E₀=0,1v V | Glukose E₀=-0,1 V | |

Die Zeilen 1-7 der Tabelle 1 sind Ausführungsformen, die in Bezug auf die Beschaltung den beiden bereits gezeigten Ausführungsbeispielen zur Beschaltung folgen.

Zeile 8 der Tabelle zeigt ein Ausführungsbeispiel, bei dem eine Sensorfunktion über eine Schlüssel-Schloss Raktion zum Nachweis von Glukose durch eine Glukoseoxidase aufgezeigt wird. Hierbei wird zunächst an die Oberfläche des Isolators Hexandekanthiol über eine EDC/NHS-Kopplungreaktion FAD an den Isolator angeordnet und sodann durch Immoblisierung der Glukoseoxidase das Apo-Enzym bereit gestellt. Die Reaktionen hierzu sind aus der Veröffentlichung Zayats et al. (Zayats, M., Katz, E. and Willner, I. (2002). Electrical Contacting of Flavoenzymes and NAD(P)+-Dependent Enzymes by Reconstitution and Affinity Interactions on Phenylboronic Acid Monolayers Associated with Au-Electrodes. J. AM. CHEM. SOC. 124, 14724-14735) bekannt, die durch Referenz in die vorliegende Patentanmeldung übernommen werden. Durch Modulation der Spannung an die Steuerelektrode gelingt dabei der spezifische Nachweis von Glukose.

## Patentansprüche

1. Elektrodenanordnung zur zyklischen Reduktion und Oxidation einer Redoxspezies in
einem Elektrolyten, wobei eine Steuerelektrode (37) und eine Kollektorelektrode (34) auf einem
isolierenden Substrat (31,32) angeordnet sind und zum Anlegen einer Spannung gegen eine Gegenelektrode (40) geschaltet sind, umfassend:
a) die Steuerelektrode (37), ausgebildet zur Umsetzung der Redoxspezies für einen zyklischen Elektronentransport zwischen der Steuer- und der Kollektorelektrode sowie
b) die der Steuerelektrode (37) gegenüberliegend angeordnete Kollektorelektrode (34), wobei auf der dem isolierenden Substrat gegenüberliegenden Seite der Kollektorelektrode (34) zusätzlich eine Schichtstruktur aus einem zweiten, einen Tunneleffekt oder Feldemission erlaubenden Isolator (35) und einem hierauf angeordneten Ladungstransfermediator (38) für die Umsetzung der Redoxspezies angeordnet ist.

2. Elektrodenanordnung nach vorherigem Anspruch
**gekennzeichnet durch**
Elektroden aus demselben Material.

3. Verfahren zum Betreiben einer Elektrodenanordnung,
**gekennzeichnet dadurch, dass**
eine Elektrodenanordnung nach einem der vorherigen Patentansprüche mit einem Ladungstransfermediator, ine Redoxspezies mit einem jeweiligen Normalpotential gewählt werden, die in Abhängigkeit der durch die Gegenelektrode an die Steuerelektrode und der durch die Gegenelektrode an die Kollektorelektrode angelegten Spannungen einen Ladungstransfer entlang der Spannungsreihe ermöglichen, wobei die Redoxspezies in oxidierter oder reduzierter Form einem Elektrolyten zugegeben wird und zyklisch an der Steuerelektrode und der Kollektorelektrode umgesetzt wird.

4. Verfahren nach dem vorherigen Anspruch
**gekennzeichnet durch**
Wahl einer Redoxspezies mit einem negativeren Normalpotential als das Normalpotential des Ladungstransfermediators, wobei die Redoxspezies in der oxidierten Form zum Elektrolyten zugegeben wird und an die Steuerelektrode ein Potential negativer als das Normalpotential der Redoxspezies und an die Kollektorelektrode ein Potential positiver als das Normalpotential des Ladungstransfermediators angelegt wird.

5. Verfahren nach dem vorvorherigem Anspruch
**gekennzeichnet durch**
Wahl einer Redoxspezies mit einem positiveren Normalpotential als das Normalpotential des Ladungstransfermediators, wobei die Redoxspezies in der reduzierten Form zum Elektrolyten zugegeben wird und an die Steuerelektrode ein Potential positiver als das Normalpotential der Redoxspezies und an die Kollektorelektrode ein Potential negativer als das Normalpotential des Ladungstransfermediators angelegt wird.

6. Verfahren nach einem der vorhergehenden Ansprüche 3 bis 5,
**gekennzeichnet durch**
Wahl eines oberen und unteren Grenzstromes an der Kollektorelektrode, bei dessen Überschreiten oder Unterschreiten der Ladungstransfer an der Kollektorelektrode oder Steuerelektrode als ein positives oder negatives Ereignis festgelegt wird.

7. Verfahren nach einem der vorhergehenden Ansprüche 3 bis 6,
**dadurch gekennzeichnet, dass**
durch Modulation der Spannung an der Steuerelektrode eine transistorartige Verstärkung des Stroms an der Kollektorelektrode erzeugt wird.

## Claims

1. Electrode arrangement for cyclical reduction and oxidation of a redox species in an electrolyte, in which a control electrode (37) and a collector electrode (34) are arranged on an insulating substrate (31, 32) and switched for applying a voltage against a counter electrode (40), comprising:
a) the control electrode (37), made for converting the redox species for cyclical electron transport between the control and the collector electrode as well as
b) the collector electrode (34) arranged lying opposite the control electrode (37), in which a layer structure made of a second insulator (35) allowing a tunnel effect or field emission and a charge transfer mediator (38) arranged on it for converting the redox species is arranged on the side of the collector electrode (34) lying opposite the insulating substrate in addition.

2. Electrode arrangement according to the previous claim,
**characterised by**
electrodes from the same material.

3. Method for operating an electrode arrangement,
**characterised in that**
an electrode arrangement according to one of the previous patent claims with a charge transfer mediator and a redox species with a respective normal potential are selected which, depending on the voltage applied through the counter electrode to the control electrode and through the counter electrode to the collector electrode, make charge transfer along the voltage series possible, in which the redox species is added to an electrolyte in oxidised or reduced form and is converted cyclically at the control electrode and the collector electrode.

4. Method according to the previous claim,
**characterised by**
selection of a redox species with a normal potential that is more negative than the normal potential of the charge transfer mediator, in which the redox species is added to the electrolyte in the oxidised form and a potential that is more negative than the normal potential of the redox species is applied to the control electrode and a potential that is more positive than the normal potential of the charge transfer mediator is applied to the collector electrode.

5. Method according to the previous claim,
**characterised by**
selection of a redox species with a normal potential that is more positive than the normal potential of the charge transfer mediator, in which the redox species is added to the electrolyte in the reduced form and a potential that is more positive than the normal potential of the redox species is applied to the control electrode and a potential that is more negative than the normal potential of the charge transfer mediator is applied to the collector electrode.

6. Method according to one of previous claims 3 to 5,
**characterised by**
selection of an upper and lower limiting current to the collector electrode, on exceeding or falling short of which the charge transfer to the collector electrode or control electrode is established as a positive or negative event.

7. Method according to one of previous claims 3 to 6,
**characterised in that**
transistor-type amplification of the current to the collector electrode is produced by modulating the voltage to the control electrode.

## Revendications

1. Agencement d'électrodes pour la réduction et l'oxydation cyclique d'une espèce rédox dans un électrolyte, dans lequel une électrode (37) de commande et une électrode (34) de collecteur sont disposées sur une substrat (31, 32) isolant et sont, pour l'application d'une tension, montées contre une contre-électrode (40), comprenant :
a) l'électrode (37) de commande constituée en vue de la transformation de l'espèce rédox pour un transport cyclique d'électrons entre l'électrode de commande et l'électrode de collecteur, ainsi que
b) l'électrode (34) de collecteur, montée en opposition à l'électrode (37) de commande, dans lequel
sur la face, opposée au substrat isolant, de l'électrode (34) de collecteur,
est disposée supplémentairement une structure stratifié composée d'un deuxième isolant (35) permettant un effet tunnel ou une émission de champ
et disposé dessus un médiateur (38) de transfert de charge pour la transformation de l'espèce rédox.

2. Agencement d'électrodes suivant la revendication précédente,
**caractérisé par**
des électrodes en le même matériau.

3. Procédé pour faire fonctionner un agencement d'électrodes,
**caractérisé en ce que**
on choisit un agencement d'électrodes suivant l'une des revendications précédentes, ayant un médiateur de transfert de charge et une espèce rédox ayant un potentiel normal respectif qui, en fonction de la tension appliquée par la contre-électrode à l'électrode de commande et de la tension appliquée par la contre-électrode à l'électrode de collecteur, rendent possible un transfert de charge le long de la série de tension, l'espèce rédox étant ajoutée sous forme oxydée ou réduite à un électrolyte et étant transformée cycliquement sur l'électrode de commande et l'électrode de collecteur.

4. Procédé suivant la revendication précédente,
**caractérisé par**
un choix d'une espèce rédox à potentiel normal plus négatif que le potentiel normal du médiateur de transfert de charge, l'espèce rédox étant ajoutée sous forme oxydée à l'électrolyte et il est appliqué, à l'électrode de commande, un potentiel plus négatif que le potentiel normal de l'espèce rédox, et à l'électrode de collecteur, un potentiel plus positif que le potentiel normal du médiateur de transfert de charge.

5. Procédé suivant la revendication avant la revendication la précédente,
**caractérisé par**
un choix d'une espèce rédox ayant un potentiel normal plus positif que le potentiel normal du médiateur de transfert de charge, l'espèce rédox étant ajoutée sous la forme réduite à l'électrolyte et il est appliqué, à l'électrode de commande, un potentiel plus positif que le potentiel normal de l'espèce rédox et, à l'électrode de collecteur, un potentiel plus négatif que le potentiel normal du médiateur du transfert de charge.

6. Procédé suivant l'une des revendications précédentes 3 à 5,
**caractérisé par**
un choix d'un courant limite supérieur et inférieur à l'électrode de collecteur, dans lequel, si l'on passe au-dessus ou en dessous, le transfert de charge à l'électrode de collecteur ou à l'électrode de commande est constaté comme un évènement positif ou négatif.

7. Procédé suivant l'une des revendications précédentes 3 à 6,
**caractérisé en ce que**
en modulant la tension à l'électrode de commande, on produit une amplification de type transistor du courant à l'électrode de collecteur.
